(19) Europäisches Patentamt
European Patent Office
Office européen des brevets

(11) **EP 0 765 847 B1**

(12) **EUROPÄISCHE PATENTSCHRIFT**

(45) Veröffentlichungstag und Bekanntmachung des Hinweises auf die Patenterteilung:
**30.06.1999   Patentblatt 1999/26**

(51) Int Cl.⁶: **C03C 3/091**, C03C 3/093, C03C 4/20

(21) Anmeldenummer: **96115187.5**

(22) Anmeldetag: **21.09.1996**

(54) **Zirkoniumoxid- und lithiumoxidhaltiges Borosilikatglas hoher chemischer Beständigkeit und geringer Viskosität und dessen Verwendung**

Zirconia and lithia containing borosilicate glass with increased chemical durability and low viscosity and its use

Verre borosilicaté contenant de l'oxyde de zirconium et de lithium ayant une haute résistance thermique et une faible viscosité, ainsi que son utilisation

(84) Benannte Vertragsstaaten:
**DE ES FR GB IT NL**

(30) Priorität: **30.09.1995  DE 19536708**

(43) Veröffentlichungstag der Anmeldung:
**02.04.1997   Patentblatt 1997/14**

(73) Patentinhaber: **SCHOTT ROHRGLAS GmbH D-95448 Bayreuth (DE)**

(72) Erfinder:
• **Watzke, Eckhart**
  **07749 Jena (DE)**
• **Kämpfer, Andrea**
  **07745 Jena (DE)**
• **Brix, Peter, Dr.**
  **55116 Mainz (DE)**
• **Ott, Franz, Dr.**
  **95666 Mitterteich (DE)**

(74) Vertreter: **Ripper, Monika Sigrid Schott Glaswerke, RWP, Hattenbergstrasse 10 55122 Mainz (DE)**

(56) Entgegenhaltungen:
EP-A- 0 297 255         EP-A- 0 699 636
DD-A- 301 821           DE-A- 2 756 555
DE-C- 4 230 607

**Beschreibung**

Gegenstand der Erfindung ist ein zirkonium- und lithiumoxidhaltiges Borosilicatglas mit einer hydrolytischen Beständigkeit, einer Säure- und einer Laugenbeständigkeit innerhalb der ersten Klasse und geringen Viskositäten vor allem im Verarbeitungsbereich.

Die Pharmaindustrie benötigt für die Verwendung als Primärpackmittel, z. B. als Ampullenglas, Gläser mit besten chemischen Beständigkeiten. Bisherige kommerzielle pharmazeutische Ampullengläser besitzen Beständigkeiten der hydrolytischen Klasse (H) 1 (gemäß DIN ISO 719), der Säureklasse (S) 1 (gemäß DIN 12116) sowie der Laugenklasse (L) 2 (gemäß DIN ISO 695). Diesen Stand der Technik repräsentieren das Glas Fiolax® klar, Code-Nr. 8412 ($SiO_2$ 74,7; $B_2O_3$ 10,0; $Al_2O_3$ 5,0; $Na_2O$ 6,5; CaO 1,5; BaO 2,0; Fluoride 0,3 Gew.-%) und das JENA[er] Geräteglas Ggl 490/5 ($SiO_2$ 73,2; $B_2O_3$ 11,0 $Al_2O_3$ 5,3; $Na_2O$ 7,0; $K_2O$ 0,2; CaO 0,8; BaO 2,5 Gew.-%) mit einem Gewichtsverlust von 100 mg/dm$^2$ (gemäß DIN ISO 695). Eine Laugenbeständigkeit der Klasse 1, d. h. ein Gewichtsverlust von < 75 mg/dm$^2$ ist bei kommerziellen pharmazeutischen Ampullengläsern bisher nicht realisiert.

Eine wichtige Forderung der Pharmaindustrie besteht jedoch in der Bereitstellung von Primärpackmitteln mit deutlich verbesserter Laugenbeständigkeit, um neuentwickelte Injektabilia, die einen verstärkten basischen Angriff auf das Behältnis ausüben, verpacken zu können. Praktische Erfahrungen haben gezeigt, daß zur Sicherung der Laugenbeständigkeit im Produktionsprozeß die Entwicklung von Gläsern im Labor mit Gewichtsverlusten von weniger als 65 bis 70 mg/dm$^2$, also sicher in der Laugenklasse 1 liegend, erforderlich ist.

Selbstverständlich dürfen bei der Erfüllung dieser Forderung die anderen wichtigen Glas- und Glasherstellungseigenschaften nicht verschlechtert werden. So muß H = 1 und S = 1 beibehalten werden. Weiter soll der lineare Wärmekoeffizient $\alpha_{20/300}$ wie bei den kommerziellen Gläsern Fiolax® klar, Code-Nr. 8412 und Ggl 490/5 ca. 4.9 x 10$^{-6}$ K$^{-1}$ betragen und darf die Viskosität aus Qualitäts- und Kostengründen im gesamten Schmelz-, Verarbeitungs- und Kühlbereich nicht zu hoch sein.

Ein wesentlicher Parameter zur Charakterisierung der Verarbeitbarkeit des Glases ist die Verarbeitungstemperatur ($V_A$), bei der die Viskosität des Glases 10$^4$ dPas beträgt. Dieser $V_A$-Wert soll für pharmazeutisches Ampullenglas nicht mehr als 1220 °C bis 1230 °C betragen, um bei der Herstellung von Rohren bzw. bei der sich anschließenden Weiterverarbeitung der Rohre zu Ampullen das Auftreten von nachteiligen Verdampfungserscheinungen von Glaskomponenten, vorrangig Alkalioxiden und Borsäure, zu verhindern und um Energiekosten zu sparen. Bei der Warmverformung des Glases auftretende Verdampfungen können zur Unbrauchbarkeit der Ampullen führen.

Zur Charakterisierung der Glasviskosität im Kühlbereich kann die Transformationstemperatur Tg, der eine Viskosität von ca. 10$^{13}$ dPas zugeordnet wird, verwendet werden. Auch sie soll nicht zu hoch sein, um Energiekosten im Kühlbereich zu sparen.

Pharmazeutische Behältergläser, wie sie in den Patentschriften DE 37 22 130 C2 und DD 30 18 21 A7 beschrieben worden sind, genügen diesen hohen Anforderungen nicht.

Gläser mit einer Zusammensetzung, wie sie aus DE 37 22 130 C2 abzuleiten sind, besitzen nicht die Laugenklasse 1. Die ein Lampenkolben- und Brandschutzsicherheitsglas beschreibende Patentschrift DE 42 30 607 C1 erwähnt in ihrem beanspruchten Bereich nur eine spezielle Zusammensetzung mit einer Laugenbeständigkeit der Klasse 1. Auch bei Gläsern einer Zusammensetzung nach DD 30 18 21 A7 ist L = 1 zwar teilweise realisiert; es zeigte sich aber, daß zum einen die Laugenklasse 1, wenn überhaupt, dann nur knapp erreicht werden konnte und zum anderen bei mehrfacher Wiederholung der Schmelze einer bestimmten Zusammensetzung der Gewichtsverlust beim Laugenbeständigkeitstest streute, so daß nicht generell L = 1 erzielt wurde. Hier sind also noch Verbesserungen nötig, um eine Laugenbeständigkeitsreserve zu haben.

Die Aufgabe der Erfindung besteht in der Entwicklung von Borosilicatgläsern hoher chemischer Beständigkeit und geringer Viskosität, vorrangig mit einer hydrolytischen Beständigkeit nach DIN ISO 719 der Klasse 1, einer Säurebeständigkeit nach DIN 12116 der Klasse 1 und insbesondere einer Laugenbeständigkeit nach DIN ISO 659 der Klasse 1 mit einem Gewichtsverlust < 65 bis 70 mg/dm$^2$ sowie mit Verarbeitungstemperaturen < 1220 °C bis 1230 °C und mit linearen Wärmeausdehnungskoeffizienten von $\alpha_{20/300}$ = 4,8 bis 5,0 x 10$^{-6}$ K$^{-1}$.

Erfindungsgemäß wird diese Aufgabe durch das in Anspruch 1 beschriebene Glas, das gewisse Mengen an Zirkonoxid und Lithiumoxid enthält, gelöst.

Im Bereich der Zusammensetzungen (Gew.-% auf Oxidbasis) $SiO_2$ 73,0 - 75,0 (bevorzugt 73,5 - 75,0); $B_2O_3$ 7.0 - 10,0 (bevorzugt 8,0 - 10,0); $Al_2O_3$ 5,0 - 7,0 (bevorzugt 5,0 - 6,0); $ZrO_2$ 1,0 - 3,0 (bevorzugt 1,0 - 2,5); $Li_2O$ 0,5 - 1,5; $Na_2O$ 0 - 10,0; $K_2O$ 0 - 10,0; MgO 0 - 3,0; CaO 0 - 3,0, BaO 0 - 3,0; SrO 0 - 3,0; ZnO 0 - 3,0 und Fluoride 0 - 3,0 sind Gläser mit H = 1, S = 1, L = 1 (Gewichtsverlust < 65 - 70 mg/dm$^2$), mit $V_A$-Werten < 1230 °C und $\alpha_{20/300}$ -Werten von 4,8 bis 5,0 x 10$^{-6}$ K$^{-1}$ zu erschmelzen, wenn das Verhältnis der Glasbildner $SiO_2$ zu $B_2O_3$ ≥ 7,5; die Summe von $SiO_2+Al_2O_3+ZrO_2$ 80,0 - 83,0 Gew.-% und die Summe der zweiwertigen Zusatzkomponenten MgO+CaO+BaO+SrO+ZnO ≤ 3,0 Gew.-% beträgt. Bevorzugt ist die Summe der Alkalioxide $Li_2O$ + $Na_2O$ + $K_2O$ auf 7,0 - 10,0 Gew.-% beschränkt.

Besonders bevorzugt ist folgender Zusammensetzungsbereich (Gew.-% auf Oxidbasis): $SiO_2$ 73,5 - 75,0;

$B_2O_3$ 8,0 - 10,0; $Al_2O_3$ 5,0 - 6.0; $ZrO_2$ 1,0 - 2,5; $Li_2O$ 0,5 - 1,5; $Na_2O$ 0,5 - 5,0; $K_2O$ 0,5 - 5,0; CaO 0,5 - 2,0 mit $SiO_2$/ $B_2O_3 \geq 7,5$; $\Sigma$ $SiO_2 + Al_2O_3 + ZrO_2$ 81,0 - 83,0; $\Sigma$ $Li_2O + Na_2O + K_2O$ 7,0 - 9,5.

Die Gläser besitzen zusätzlich noch weitere vorteilhafte Eigenschaften, die zu ihrer fehlerfreien und kostengünstigen Massenproduktion unbedingt erforderlich sind: So erfüllen sie die notwendigen Bedingungen, die an das Schmelzverhalten, die Kristallisations- und Entmischungsstabilität, die elektrische Leitfähigkeit, das Korrosionsverhalten gegenüber den Feuerfestmaterialien, die Läutereigenschaften, die Verdampfungseigenschaften usw. gestellt werden.

Ausgehend von der gerundeten Zusammensetzung des gängigen Behälterglastyps (in Gew.-% auf Oxidbasis) $SiO_2$ 75; $B_2O_3$ 11; $Al_2O_3$ 5; $\Sigma$ $Na_2O+K_2O$ 7; $\Sigma$ $BaO+CaO$ 2 werden die Optimierungen, die zur erfindungsgemäßen Zusammensetzung führten, erläutert:

Zur Realisierung einer Laugenbeständigkeit der Klasse 1 mit einem Abtrag < 65 bis 70 mg/dm² und gleichzeitig einer relativ geringen Verarbeitungstemperatur von $V_A$ < 1220 bis 1230 °C muß dem oben beschriebenen Borosilicatglas sowohl $ZrO_2$ im Bereich von 1 bis 3 Gew.-% als auch 0,5 - 1,5 Gew.-% $Li_2O$ zugesetzt werden (in DE 37 22 130 C2 ganz fehlend). Außerdem muß das Verhältnis der Glasbildner $SiO_2$/$B_2O_3$ größer als oder gleich 7,5 sein. Mit diesem Verhältnis bzw. mit dem relativ geringen Anteil an $B_2O_3$ (7,0- 10,0 Gew.-%) unterscheidet sich die erfindungsgemäße Zusammensetzung von denen aus DE 37 22 130 C2 und DD 301 821 A7.

Durch die Variation weiterer Komponenten ($Al_2O_3$, Alkali- bzw. Erdalkalioxide, ZnO) kann die Zusammensetzung optimiert und können die anderen wichtigen Glas- bzw. Glasherstellungseigenschaften verbessert bzw. angepaßt werden.

Die gefundene Lösung ist umso überraschender, als das allgemeine Borosilicatglas $SiO_2$ - $B_2O_3$ - $Al_2O_3$ - $M_2O$ - MO - ZK (= Zusatzkomponenten) seit langem bekannt ist, häufig wissenschaftlich untersucht wurde und vielseitig praktisch genutzt wird.

Mittels Optimierungsrechnungen, die auf linearen Modellen beruhen, kann dieser Zusammensetzungsbereich mit vorteilhaft hoher Laugenbeständigkeit im übrigen auch nicht ermittelt werden, da die Laugenbeständigkeit des Glases bei steigendem Verhältnis $SiO_2$/$B_2O_3$ nicht linear ansteigt, so daß eine solche Rechnung den Bereich geringer Abtragung nicht ermitteln würde.

Der Zusatz von $ZrO_2$ und der geringe Anteil an $B_2O_3$ verbessern die Beständigkeit gegenüber Wasser, Säuren und Laugen. Der Zusatz von $ZrO_2$ ist jedoch durch seine geringe Löslichkeit im Glas und die Erhöhung der Viskosität des Glases begrenzt. Auch die nötige Reduzierung des $B_2O_3$-Gehalts verursacht einen Viskositätsanstieg, der aber durch die Zugabe von Alkalioxiden, besonders von $Li_2O$, kompensiert werden kann.

Bei der Auswahl der Alkalioxide sind verschiedene Aspekte zu beachten: Zu große Mengen an $Li_2O$ in der Glasschmelze verursachen einen unzulässig starken Angriff auf das Feuerfestmaterial der Schmelzwanne, so daß 0,5 - 1,5 Gew.-% $Li_2O$ ein Optimum darstellen. So wie $Li_2O$ weniger als $Na_2O$ aus der Schmelze des betrachteten Borosilicatglases verdampft, ist der Dampfdruck von $Na_2O$ geringer als von $K_2O$. Dies spricht (bei gegebenem max. $Li_2O$-Gehalt) für eine ausschließliche bzw. hauptsächliche Verwendung von $Na_2O$. Auch die geringeren Kosten der $Na_2O$-Rohstoffe sind ein weiteres Argument.

Bei besonderen Anwendungsfällen des erfindungsgemäßen Glases ist es sogar zwingend nötig, auf die Verwendung von $K_2O$ ganz zu verzichten: z. B. bei der Herstellung von "photomultiplier tubes". Die $K_2O$-Rohstoffe können nämlich geringste Mengen von radioaktiven Verunreinigungen enthalten, und diese würden u. U. ein Ansteigen des Rauschpegels im Photomultiplier verursachen.

Dagegen müssen bei CaO-armen und CaO-freien Synthesevarianten zur Einstellung des gewünschten $\alpha_{20/300}$-Wertes größere Anteile an $K_2O$ eingesetzt werden.

Für CaO-freie Synthesen ist folgender Zusammensetzungsbereich (Gew.-% auf Oxidbasis) vorteilhaft: $SiO_2$ 73,5 - 75,0; $B_2O_3$ 8,0 - 10,0; $Al_2O_3$ 5,0 - 6,0; $ZrO_2$ 1,0 - 2,5; $Li_2O$ 0,5 - 1,5; $Na_2O$ 0 - 3,0; $K_2O$ 4,0 - 7,0 mit $SiO_2$/ $B_2O_3 \geq 7,5$; $\Sigma$ $SiO_2 + Al_2O_3 + ZrO_2$ 81,0 - 83,0; $\Sigma$ $Li_2O + Na_2O + K_2O$ 7,0 - 10,0.

Auch ist bekannt, daß bei der Weiterverarbeitung von Rohren zu Ampullen durch die Wiedererwärmung des Glases bei hohen Verformungstemperaturen ein hoher $Na_2O$-Gehalt besonders schnell zu Ausblühungen an der Glasoberfläche führen kann. Dem kann jedoch schon durch das Absenken des $V_A$-Wertes durch die $ZrO_2$- und $Li_2O$-Zugabe und auch durch die alleinige Verwendung von $K_2O$ bzw. die gleichzeitige Verwendung von $K_2O$ und $Na_2O$ und durch geringe Zusätze von ZnO entgegengewirkt werden.

Da die Verdampfungsprodukte bei hohen Temperaturen in technischen Borosilicatgläsern, meistens Metaborate, unabhängig von der Art des verwendeten Alkalioxides ($M_2O$) einen Borsäuremodul

$$\Psi = B_2O_3 / (B_2O_3 + M_2O) \text{ (in Mol.-%) von 0,53 bis 0,58}$$

besitzen und damit dem Borsäuremodul der Glaszusammensetzung sehr nahe kommen, was eine Verdampfung erleichtert, ist es erforderlich, die Verdampfung beim Schmelzprozeß auf anderem Wege, nämlich durch eine ausgewogene Erhöhung der Viskosität zu reduzieren.

Dies wird durch relativ hohe Gehalte an $SiO_2$ (73,0 - 75,0 Gew.-%) und $Al_2O_3$ (5,0 - 7,0 Gew.-%) erreicht.

Mit einem $Al_2O_3$-Anteil dieser Höhe unterscheidet sich die erfindungsgemäße Glaszusammensetzung wiederum von den Zusammensetzungen aus DD 30 18 21 A7. Auch die Glaszusammensetzungen aus DE 42 30 607 C1 enthalten mit 1,5 - 4,0 Gew.-% deutlich weniger $Al_2O_3$.

Wird der Anteil an $SiO_2$ und $Al_2O_3$ noch weiter erhöht als erfindungsgemäß beansprucht, steigt die Viskosität und damit auch der $V_A$-Wert zu stark an, was auch die Läuterung verschlechtert. Auch führen zu große $Al_2O_3$-Anteile zu einer merklichen Verschlechterung der Säurebeständigkeit.

Unter Beachtung aller vor- und nachteiligen Wirkungen der Bestandteile eines solchen hochwertigen, vielseitig einsetzbaren pharmazeutischen Ampullenglases erweist sich die folgende Glaszusammensetzung (Gew.-% auf Oxidbasis) als besonders vorteilhaft:

$SiO_2$ 74,0 - 74,5; $B_2O_3$ 8,5 - 9,5 (besonders bevorzugt 9,0 - 9,5); $Al_2O_3$ 5,3 - 6,0 (besonders bevorzugt 5,3 - 5,8); $ZrO_2$ 1,6 - 2,0; $Li_2O$ 0,7 - 1,3 (besonders bevorzugt 0,9 - 1,1); $Na_2O$ 3,0 - 5,0; $K_2O$ 2,0 - 5,0 (besonders bevorzugt 2,0 - 4,0); CaO 0,5 - 1,6 (besonders bevorzugt 0,8 - 1,2); mit $\Sigma$ $SiO_2$ + $Al_2O_3$ + $ZrO_2$ 81,3 - 82,0 und $\Sigma$ $Li_2O$ + $Na_2O$ + $K_2O$ 7,0 - 9,5 (besonders bevorzugt 7,0 - 9,0).

So wird bei einem $\alpha$-Wert von ca. 4,9 x $10^{-6}$ $K^{-1}$ eine hervorragende chemische Beständigkeit von H = 1, S = 1 und L = 1 (Abtrag < 65 mg/$dm^2$) und ein $V_A$-Wert von sogar $\leq$ 1200 °C erreicht.

Da CaO eine stabilisierende Wirkung auf die Säurebeständigkeit ausübt, sollten, wenn möglich, geringe Mengen im Glas enthalten sein. Ebenfalls sind geringe Mengen von BaO zur weiteren Viskositätserniedrigung und Absenkung der Schmelztemperaturen hilfreich. Es kann andererseits auch nötig sein, daß das Glas kein oder nur sehr wenig BaO und CaO enthält, da bekannt ist, daß diese Komponenten mit einigen speziellen Injektionslösungen in unerwünschter Weise reagieren können.

Wenn die jeweiligen pharmazeutischen und technischen Einsatzgebiete nicht höchste Ansprüche an die chemische Beständigkeit stellen, können die Glaseigenschaften durch Zusätze der weiteren zweiwertigen Komponenten SrO, MgO und ZnO sowie durch Variation der CaO- und BaO-Anteile weiter modifiziert werden.

Ihr Gesamtanteil muß aber auf bis zu maximal 3,0 Gew.-% begrenzt bleiben, womit sich die erfindungsgemäße Zusammensetzung von der aus DE 42 30 607 C1 bekannten Zusammensetzung ($\Sigma$ MgO + CaO + BaO + ZnO + SrO + $ZrO_2$ = 6 bis 10 $\stackrel{\triangle}{=}$ $\Sigma$ MgO + CaO + BaO + ZnO + SrO = 3 bis 9,5 bei $ZrO_2$ = 0,5 bis 3) unterscheidet.

Außerdem können den erfindungsgemäßen Glaszusammensetzungen geringe Mengen von Fluoriden zur Schmelzbeschleunigung bzw. zur weiteren Viskositätserniedrigung oder bekannte Läutermittel wie Chloride und $Sb_2O_3$ zugesetzt werden.

Ausführungsbeispiele:

In Tabelle 1 werden erfindungsgemäße Glaszusammensetzungen und ihre wesentlichen die Erfindung betreffenden Eigenschaften wiedergegeben.

Es ist ersichtlich, daß bei Einhaltung der vorgegebenen Wärmedehnung von $\alpha_{20/300}$ = 4,9 x $10^{-6}$$K^{-1}$ die Laugenbeständigkeit L, ausgedrückt durch geringe Abtragswerte von 58 bis 65 mg/$dm^2$, sehr sicher in der Klasse 1 liegt und die Verarbeitungstemperaturen mit $V_A$-Werten von 1180 °C bis 1220 °C niedrig sind.

Tabelle 1

| Beispiele erfindungsgemäßer Gläser | | | | | |
|---|---|---|---|---|---|
| Glaszusammensetzungen in Gew.-% | | | | | |
| Glasbezeichnung | 1 | 2 | 3 | 4 | 5 |
| $SiO_2$ | 74,3 | 74,2 | 74,3 | 74,3 | 74,3 |
| $B_2O_3$ | 9,3 | 8,8 | 9,3 | 9,3 | 9,3 |
| $Al_2O_3$ | 5,5 | 5,8 | 5,5 | 5,5 | 5,5 |
| $ZrO_2$ | 1,8 | 1,8 | 1,8 | 1,8 | 1,8 |
| $Li_2O$ | 1,0 | 1,0 | 1,0 | 1,0 | 1,0 |
| $Na_2O$ | 4,0 | 3,0 | 3,5 | 3,0 | 2,0 |
| $K_2O$ | 3,0 | 4,0 | 3,8 | 4,6 | 6,1 |
| CaO | 1,1 | 1,4 | 0,8 | 0,5 | - |
| mit | | | | | |
| $SiO_2$/$B_2O_3$ | 8,0 | 8,4 | 8,0 | 8,0 | 8,0 |

Tabelle 1   (fortgesetzt)

| Beispiele erfindungsgemäßer Gläser | | | | | |
|---|---|---|---|---|---|
| Glaszusammensetzungen in Gew.-% | | | | | |
| Glasbezeichnung | 1 | 2 | 3 | 4 | 5 |
| $\Sigma$ SiO$_2$+Al$_2$O$_3$+ZrO$_2$ | 81,6 | 81,8 | 81,6 | 81,6 | 81,6 |
| $\Sigma$ Li$_2$O+Na$_2$O+K$_2$O | 8,0 | 8,0 | 8,3 | 8,6 | 9,1 |
| Wesentliche Glaseigenschaften | | | | | |
| Glasbezeichnung | 1 | 2 | 3 | 4 | 5 |
| $\alpha_{20/300}$ (10$^{-6}$ K$^{-1}$) | 4,9 | 4,9 | 4,9 | 4,9 | 4,9 |
| L (mg/dm$^2$) | 62 | 58 | 63 | 64 | 65 |
| V$_A$(°C) | 1180 | 1200 | 1190 | 1200 | 1220 |

Zur Demonstration weiterer günstiger Eigenschaften werden zu dem Beispiel 1 noch folgende Angaben gemacht:

Dichte $\rho$: 2,36 g/cm$^3$
Transformationstemperatur T$_g$: 540 °C
oberer Kühlpunkt OKP: 550 °C
Erweichungspunkt E$_w$: 785 °C

Kristallisations- und Entmischungsstabilität: ausreichend gut zur fehlerfreien Herstellung des Glases als Massenerzeugnis.
Die T$_g$- und OKP-Temperaturen belegen, daß das Glas auch im Kühlbereich relativ geringe und damit günstige Viskositäten besitzt, so daß eine kostengünstige Kühlung möglich ist.
Die Gläser wurden in herkömmlicher Weise im gasbeheizten Laborofen bei 1620 °C in 0,5-l-Tiegeln im Zeitraum von ca. vier Stunden erschmolzen, anschließend in Metallformen zu Blöcken gegossen und gekühlt. Als Rohstoffe wurden Sand, H$_3$BO$_3$, Al(OH)$_3$, Alkali- und Erdalkalicarbonate, -nitrate, Zirkonerde und ZnO eingesetzt. Die Gläser zeigten ein gutes Schmelzverhalten. Als Rohstoffe können auch die für technische Gläser üblicherweise verwendeten Rohstoffe eingesetzt werden.
Das erfindungsgemäße Glas ist vorrangig zur Verwendung als vielseitig einsetzbares Pharmaprimärpackmittel, z. B. als Ampullenglas, geeignet. Es ist darüber hinaus auch als Geräteglas für Labor- und andere technische Anwendungen einzusetzen.

**Patentansprüche**

1.  Zirkonium- und lithiumoxidhaltiges Borosilicatglas hoher chemischer Beständigkeit und geringer Viskosität
    **gekennzeichnet durch**
    eine Zusammensetzung (in Gew.-% auf Oxidbasis) von

| | |
|---|---|
| SiO$_2$ | 73,0 - 75,0 |
| B$_2$O$_3$ | 7,0 - 10,0 |
| Al$_2$O$_3$ | 5,0 - 7,0 |
| ZrO$_2$ | 1,0 - 3,0 |
| Li$_2$O | 0,5 - 1,5 |
| Na$_2$O | 0 - 10,0 |
| K$_2$O | 0 - 10,0 |
| MgO | 0 - 3,0 |
| CaO | 0 - 3,0 |
| BaO | 0 - 3,0 |
| SrO | 0 - 3,0 |
| ZnO | 0 - 3,0 |

(fortgesetzt)

| | |
|---|---|
| Fluoride | 0 - 3,0 |
| mit | |
| $SiO_2/B_2O_3$ | $\geq 7,5$ |
| $\Sigma\ SiO_2+Al_2O_3+ZrO_2$ | 80,0 - 83,0 |
| $\Sigma\ MgO+CaO+BaO+SrO+ZnO$ | $\leq 3,0$ |

2. Zirkonium- und lithiumoxidhaltiges Borosilicatglas nach Anspruch 1,
   **gekennzeichnet durch**
   eine Zusammensetzung (in Gew.-% auf Oxidbasis) von

| | |
|---|---|
| $SiO_2$ | 73,5 - 75,0 |
| $B_2O_3$ | 8,0 - 10,0 |
| $Al_2O_3$ | 5,0 - 6,0 |
| $ZrO_2$ | 1,0 - 2,5 |
| $Li_2O$ | 0,5 - 1,5 |
| $Na_2O$ | 0 - 10,0 |
| $K_2O$ | 0 - 10,0 |
| $MgO$ | 0 - 3,0 |
| $CaO$ | 0 - 3,0 |
| $BaO$ | 0 - 3,0 |
| $SrO$ | 0 - 3,0 |
| $ZnO$ | 0 - 3,0 |
| mit | |
| $SiO_2\ /B_2O_3$ | $\geq 7,5$ |
| $\Sigma\ SiO_2\ +Al_2O_3\ +ZrO_2$ | 80,0 - 83,0 |
| $\Sigma\ Li_2O+Na_2O+K_2O$ | 7,0 - 10,0 |
| $\Sigma\ MgO+CaO+BaO+SrO+ZnO$ | $\leq 3,0$ |

3. Borosilicatglas nach Anspruch 1 oder 2,
   **gekennzeichnet durch**
   eine Zusammensetzung (in Gew.-% auf Oxidbasis) von

| | |
|---|---|
| $SiO_2$ | 73,5 - 75,0 |
| $B_2O_3$ | 8,0 - 10,0 |
| $Al_2O_3$ | 5,0 - 6,0 |
| $ZrO_2$ | 1,0 - 2,5 |
| $Li_2O$ | 0,5 - 1,5 |
| $Na_2O$ | 0,5 - 5,0 |
| $K_2O$ | 0,5 - 5,0 |
| $CaO$ | 0,5 - 2,0 |
| mit | |
| $SiO_2/B_2O_3$ | $\geq 7,5$ |
| $\Sigma\ SiO_2+Al_2O_3+ZrO_2$ | 81,0 - 83,0 |
| $\Sigma\ Li_2O+Na_2O+K_2O$ | 7,0 - 9,5 |

4. Borosilicatglas nach Anspruch 1 oder 2,
   **gekennzeichnet durch**
   eine Zusammensetzung (in Gew.-% auf Oxidbasis) von

| | |
|---|---|
| $SiO_2$ | 73,5 - 75,0 |
| $B_2O_3$ | 8,0 - 10,0 |
| $Al_2O_3$ | 5,0 - 6,0 |
| $ZrO_2$ | 1,0 - 2,5 |
| $Li_2O$ | 0,5 - 1,5 |
| $Na_2O$ | 0 - 3,0 |
| $K_2O$ | 4,0 - 7,0 |
| mit | |
| $SiO_2/B_2O_3$ | $\geq 7,5$ |
| $\Sigma\ SiO_2 + Al_2O_3 + ZrO_2$ | 81,0 - 83,0 |
| $\Sigma\ Li_2O + Na_2O + K_2O$ | 7,0 - 10,0 |

5. Borosilicatglas nach wenigstens einem der Ansprüche 1 bis 3,
   **gekennzeichnet durch**
   eine Zusammensetzung in Gew.-% auf Oxidbasis von

| | |
|---|---|
| $SiO_2$ | 74,0 - 74,5 |
| $B_2O_3$ | 8,5 - 9,5 |
| $Al_2O_3$ | 5,3 - 6,0 |
| $ZrO_2$ | 1,6 - 2,0 |
| $Li_2O$ | 0,7 - 1,3 |
| $Na_2O$ | 3,0 - 5,0 |
| $K_2O$ | 2,0 - 5,0 |
| $CaO$ | 0,5 - 1,6 |
| mit | |
| $\Sigma\ SiO_2 + Al_2O_3 + ZrO_2$ | 81,3 - 82,0 |
| $\Sigma\ Li_2O + Na_2O + K_2O$ | 7,0 - 9,5 |

6. Borosilicatglas nach Anspruch 5,
   **gekennzeichnet durch**
   eine Zusammensetzung in Gew.-% auf Oxidbasis von

| | |
|---|---|
| $SiO_2$ | 74,0 - 74,5 |
| $B_2O_3$ | 9,0 - 9,5 |
| $Al_2O_3$ | 5,3 - 5,8 |
| $ZrO_2$ | 1,6 - 2,0 |
| $Li_2O$ | 0,9 - 1,1 |
| $Na_2O$ | 3,0 - 5,0 |
| $K_2O$ | 2,0 - 4,0 |
| $CaO$ | 0,8 - 1,2 |
| mit | |
| $\Sigma\ SiO_2 + Al_2O_3 + ZrO_2$ | 81,3 - 82,0 |
| $\Sigma\ Li_2O + Na_2O + K_2O$ | 7,0 - 9,0 |

7. Verwendung des Borosilicatglases nach wenigstens einem der vorhergehenden Ansprüche mit einer hydrolytischen Beständigkeit nach DIN ISO 719 der Klasse1, einer Säurebeständigkeit nach DIN 12116 der Klasse 1, einer Laugenbeständigkeit nach DIN ISO 659 der Klasse 1 mit einem Gewichtsverlust kleiner als 70 mg/dm$^2$, Verarbeitungstemperaturen $V_A$ von max. 1230 °C und einem linearen Wärmedehnungskoeffizienten $\alpha_{20/300}$ = 4,8 - 5,0 x 10$^{-6}$ K$^{-1}$ als Pharmaprimärpackmittel, z.B. als Ampullenglas, sowie als Geräteglas für Labor- und andere technische Anwendungen.

**Claims**

1. Borosilicate glass of high chemicals resistance and low viscosity which contains zirconium oxide and lithium oxide, characterized by a composition (in % by weight, based on oxide) of

| | |
|---|---|
| $SiO_2$ | 73.0 - 75.0 |
| $B_2O_3$ | 7.0 - 10.0 |
| $Al_2O_3$ | 5.0 - 7.0 |
| $ZrO_2$ | 1.0 - 3.0 |
| $Li_2O$ | 0.5 - 1.5 |
| $Na_2O$ | 0 - 10.0 |
| $K_2O$ | 0 - 10.0 |
| MgO | 0 - 3.0 |
| CaO | 0 - 3.0 |
| BaO | 0 - 3.0 |
| SrO | 0 - 3.0 |
| ZnO | 0 - 3.0 |
| fluorides | 0 - 3.0 |
| with | |
| $SiO_2/B_2O_3$ | $\geq$7.5 |
| $\Sigma$ $SiO_2$+$Al_2O_3$+$ZrO_2$ | 80.0 - 83.0 |
| $\Sigma$ MgO+CaO+BaO+SrO+ZnO | $\leq$3.0 |

2. Borosilicate glass containing zirconium oxide and lithium oxide according to Claim 1, characterized by a composition (in % by weight, based on oxide) of

| | |
|---|---|
| $SiO_2$ | 73.5 - 75.0 |
| $B_2O_3$ | 8.0 - 10.0 |
| $Al_2O_3$ | 5.0 - 6.0 |
| $ZrO_2$ | 1.0 - 2.5 |
| $Li_2O$ | 0.5 - 1.5 |
| $Na_2O$ | 0 - 10.0 |
| $K_2O$ | 0 - 10.0 |
| MgO | 0 - 3.0 |
| CaO | 0 - 3.0 |
| BaO | 0 - 3.0 |
| SrO | 0 - 3.0 |
| ZnO | 0 - 3.0 |
| with | |
| $SiO_2/B_2O_3$ | $\geq$7.5 |
| $\Sigma$ $SiO_2$+$Al_2O_3$+$ZrO_2$ | 80.0 - 83.0 |

(continued)

| Σ Li$_2$O+Na$_2$O+K$_2$O | 7.0 - 10.0 |
|---|---|
| Σ MgO+CaO+BaO+SrO+ZnO | ≤3.0 |

3. Borosilicate glass according to Claim 1 or 2, characterized by a composition (in % by weight, based on oxide) of

| SiO$_2$ | 73.5 - 75.0 |
|---|---|
| B$_2$O$_3$ | 8.0 - 10.0 |
| Al$_2$O$_3$ | 5.0 - 6.0 |
| ZrO$_2$ | 1.0 - 2.5 |
| Li$_2$O | 0.5 - 1.5 |
| Na$_2$O | 0.5 - 5.0 |
| K$_2$O | 0.5 - 5.0 |
| CaO | 0.5 - 2.0 |
| with | |
| SiO$_2$/B$_2$O$_3$ | ≥7.5 |
| Σ SiO$_2$+Al$_2$O$_3$+ZrO$_2$ | 81.0 - 83.0 |
| Σ Li$_2$O+Na$_2$O+K$_2$O | 7.0 - 9.5 |

4. Borosilicate glass according to Claim 1 or 2, characterized by a composition (in % by weight, based on oxide) of

| SiO$_2$ | 73.5 - 75.0 |
|---|---|
| B$_2$O$_3$ | 8.0 - 10.0 |
| Al$_2$O$_3$ | 5.0 - 6.0 |
| ZrO$_2$ | 1.0 - 2.5 |
| Li$_2$O | 0.5 - 1.5 |
| Na$_2$O | 0 - 3.0 |
| K$_2$O | 4.0 - 7.0 |
| with | |
| SiO$_2$/B$_2$O$_3$ | ≥7.5 |
| Σ SiO$_2$+Al$_2$O$_3$+ZrO$_2$ | 81.0 - 83.0 |
| Σ Li$_2$O+Na$_2$O+K$_2$O | 7.0 - 10.0 |

5. Borosilicate glass according to at least one of Claims 1 to 3, characterized by a composition, in % by weight, based on oxide, of

| SiO$_2$ | 74.0 - 74.5 |
|---|---|
| B$_2$O$_3$ | 8.5 - 9.5 |
| Al$_2$O$_3$ | 5.3 - 6.0 |
| ZrO$_2$ | 1.6 - 2.0 |
| Li$_2$O | 0.7 - 1.3 |
| Na$_2$O | 3.0 - 5.0 |
| K$_2$O | 2.0 - 5.0 |
| CaO | 0.5 - 1.6 |
| with | |
| Σ SiO$_2$+Al$_2$O$_3$+ZrO$_2$ | 81.3 - 82.0 |

(continued)

| Σ Li₂O+Na₂O+K₂O | 7.0 - 9.5 |
|---|---|

6. Borosilicate glass according to Claim 5, characterized by a composition, in % by weight, based on oxide, of

| $SiO_2$ | 74.0 - 74.5 |
|---|---|
| $B_2O_3$ | 9.0 - 9.5 |
| $Al_2O_3$ | 5.3 - 5.8 |
| $ZrO_2$ | 1.6 - 2.0 |
| $Li_2O$ | 0.9 - 1.1 |
| $Na_2O$ | 3.0 - 5.0 |
| $K_2O$ | 2.0 - 4.0 |
| CaO | 0.8 - 1.2 |
| with | |
| $\Sigma\ SiO_2+Al_2O_3+ZrO_2$ | 81.3 - 82.0 |
| $\Sigma\ Li_2O+Na_2O+K_2O$ | 7.0 - 9.0 |

7. Use of the borosilicate glass according to at least one of the preceding claims, having class 1 hydrolytic resistance, in accordance with DIN ISO 719, class 1 acid resistance, in accordance with DIN 12116, class 1 caustic lye resistance, in accordance with DIN ISO 659, with a weight loss of less than 70 mg/dm$^2$, a working point $V_A$ of max. 1230°C and a coefficient of linear thermal expansion $\alpha_{20/300}$ of 4.8 - 5.0 x 10$^{-6}$ K$^{-1}$, as primary packaging material for pharmaceuticals, for example as ampoule glass, and as instrument glass for laboratory and other technical applications.

**Revendications**

1. Verre de borosilicate contenant de l'oxyde de zirconium et de l'oxyde de lithium de grande stabilité chimique et de faible viscosité, caractérisé par une composition (en % en poids sur base des oxydes) de

| $SiO_2$ | 73,0 - 75,0 |
|---|---|
| $B_2O_3$ | 7,0 - 10,0 |
| $Al_2O_3$ | 5,0 - 7,0 |
| $ZrO_2$ | 1,0 - 3,0 |
| $Li_2O$ | 0,5 - 1,5 |
| $Na_2O$ | 0 - 10,0 |
| $K_2O$ | 0 - 10,0 |
| MgO | 0 - 3,0 |
| CaO | 0 - 3,0 |
| BaO | 0 - 3,0 |
| SrO | 0 - 3,0 |
| ZnO | 0 - 3,0 |
| Fluorure | 0 - 3,0 |
| avec | |
| $SiO_2/B_2O_3$ | ≥7,5 |
| $\Sigma\ SiO_2+Al_2O_3+ZrO_2$ | 80,0 - 83,0 |
| $\Sigma\ MgO+CaO+BaO+SrO+ZnO$ | ≤3,0 |

2. Verre de borosilicate contenant de l'oxyde de zirconium et de l'oxyde de lithium suivant la revendication 1, caractérisé par une composition (en % en poids sur base des oxydes) de

| | |
|---|---|
| $SiO_2$ | 73,5 - 75,0 |
| $B_2O_3$ | 8,0 - 10,0 |
| $Al_2O_3$ | 5,0 - 6,0 |
| $ZrO_2$ | 1,0 - 2,5 |
| $Li_2O$ | 0,5 - 1,5 |
| $Na_2O$ | 0 - 10,0 |
| $K_2O$ | 0 - 10,0 |
| $MgO$ | 0 - 3,0 |
| $CaO$ | 0 - 3,0 |
| $BaO$ | 0 - 3,0 |
| $SrO$ | 0 - 3,0 |
| $ZnO$ | 0 - 3,0 |
| avec | |
| $SiO_2/B_2O_3$ | $\geq 7,5$ |
| $\Sigma\ SiO_2 + Al_2O_3 + ZrO_2$ | 80,0 - 83,0 |
| $\Sigma\ Li_2O + Na_2O + K_2O$ | 7,0 - 10,0 |
| $\Sigma\ MgO + CaO + BaO + SrO + ZnO$ | $\leq 3,0$ |

**3.** Verre de borosilicate suivant la revendication 1 ou 2, caractérisé par une composition (en % en poids sur base des oxydes) de

| | |
|---|---|
| $SiO_2$ | 73,5 - 75,0 |
| $B_2O_3$ | 8,0 - 10,0 |
| $Al_2O_3$ | 5,0 - 6,0 |
| $ZrO_2$ | 1,0 - 2,5 |
| $Li_2O$ | 0,5 - 1,5 |
| $Na_2O$ | 0,5 - 5,0 |
| $K_2O$ | 0,5 - 5,0 |
| $CaO$ | 0,5 - 2,0 |
| avec | |
| $SiO_2/B_2O_3$ | $\geq 7,5$ |
| $\Sigma\ SiO_2 + Al_2O_3 + ZrO_2$ | 81,0 - 83,0 |
| $\Sigma\ Li_2O + Na_2O + K_2O$ | 7,0 - 9, 5 |

**4.** Verre de borosilicate suivant la revendication 1 ou 2, caractérisé par une composition (en % en poids sur base des oxydes) de

| | |
|---|---|
| $SiO_2$ | 73,5 - 75,0 |
| $B_2O_3$ | 8,0 - 10,0 |
| $Al_2O_3$ | 5,0 - 6,0 |
| $ZrO_2$ | 1,0 - 2,5 |
| $Li_2O$ | 0,5 - 1,5 |
| $Na_2O$ | 0 - 3,0 |
| $K_2O$ | 4,0 - 7,0 |
| avec | |

(suite)

| | |
|---|---|
| $SiO_2/B_2O_3$ | $\geq 7,5$ |
| $\Sigma\ SiO_2+Al_2O_3+ZrO_2$ | 81,0 - 83,0 |
| $\Sigma\ Li_2O+Na_2O+K_2O$ | 7,0 - 10,0 |

**5.** Verre de borosilicate suivant l'une au moins des revendications 1 à 3, caractérisé par une composition en % en poids sur base des oxydes de

| | |
|---|---|
| $SiO_2$ | 74,0 - 74,5 |
| $B_2O_3$ | 8,5 - 9,5 |
| $Al_2O_3$ | 5,3 - 6,0 |
| $ZrO_2$ | 1,6 - 2,0 |
| $Li_2O$ | 0,7 - 1,3 |
| $Na_2O$ | 3,0 - 5,0 |
| $K_2O$ | 2,0 - 5,0 |
| CaO | 0,5 - 1,6 |
| | |
| avec | |
| | |
| $\Sigma\ SiO_2+Al_2O_3+ZrO_2$ | 81,3 - 82,0 |
| $\Sigma\ Li_2O+Na_2O+K_2O$ | 7,0 - 9,5 |

**6.** Verre de borosilicate suivant la revendication 5, caractérisé par une composition en % en poids sur base des oxydes de

| | |
|---|---|
| $SiO_2$ | 74,0 - 74,5 |
| $B_2O_3$ | 9,0 - 9,5 |
| $Al_2O_3$ | 5,3 - 5,8 |
| $ZrO_2$ | 1,6 - 2,0 |
| $Li_2O$ | 0,9 - 1,1 |
| $Na_2O$ | 3,0 - 5,0 |
| $K_2O$ | 2,0 - 4,0 |
| CaO | 0,8 - 1,2 |
| | |
| avec | |
| | |
| $\Sigma\ SiO_2+Al_2O_3+ZrO_2$ | 81,3 - 82,0 |
| $\Sigma\ Li_2O+Na_2O+K_2O$ | 7,0 - 9,0 |

**7.** Utilisation du verre de borosilicate suivant l'une au moins des revendications précédentes, ayant une stabilité à l'hydrolyse de classe 1 d'après la norme DIN ISO 719, une stabilité acide de classe 1 d'après la norme DIN 12116, une résistance aux alcalis de classe 1 d'après la norme DIN ISO 659, avec une perte en poids inférieure à 70 mg/$dm^2$, des températures de transformation $V_A$ de maximum 1230°C et un coefficient linéaire de dilatation thermique $\alpha_{20/300} = 4,8 - 5,0\ x\ 10^{-6}\ K^{-1}$, comme emballages pharmaprimaires, par exemple comme verre pour ampoules ainsi que comme verre pour appareils pour applications en laboratoire et autres applications techniques.